Europäisches Patentamt

European Patent Office

Office européen des brevets

(11) Veröffentlichungsnummer: **0 314 829 B1**

(12) **EUROPÄISCHE PATENTSCHRIFT**

(45) Veröffentlichungstag der Patentschrift: **13.05.92**

(21) Anmeldenummer: **87116202.0**

(22) Anmeldetag: **04.11.87**

(51) Int. Cl.⁵: **G01N 3/30**

(54) **Maschine für die Schnellzerreissprüfung.**

(43) Veröffentlichungstag der Anmeldung:
**10.05.89 Patentblatt 89/19**

(45) Bekanntmachung des Hinweises auf die
Patenterteilung:
**13.05.92 Patentblatt 92/20**

(84) Benannte Vertragsstaaten:
**DE FR GB IT**

(56) Entgegenhaltungen:
**DE-A- 1 573 443**
**DE-B- 1 164 124**
**US-A- 4 107 982**
**US-A- 4 426 875**
**US-A- 4 452 088**

**REVUE DE METALLURGIE, Band 69, Nr. 2,
Februar 1972, Seiten 145-148, Paris, FR; M.
GRUMBACH et al.: "Essais de fragilité par
traction par choc"**

**TECHNISCHE RUNDSCHAU, Band 66, Nr. 5, 5.
Februar 1974, Seiten 4-7, Bern, CH; T. VAR-
GA: "Eisenwerkstoffe und ihre Prüfung"**

(73) Patentinhaber: **CARL SCHENCK AG
Landwehrstrasse 55 Postfach 40 18
W-6100 Darmstadt(DE)**

(72) Erfinder: **Beran, Josef
Holzgasse 46
W-6101 Rossdorf 1(DE)**
Erfinder: **Pohl, Andreas
Ringstrasse 69
W-6114 Gross-Umstadt(DE)**

(74) Vertreter: **Brandt, Ernst-Ulrich
Fa. Carl Schenck AG Patentabteilung Landwehrstrasse 55 Postfach 40 18
W-6100 Darmstadt 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Maschine für die Schnellzerreißprüfung von Zugproben gemäß dem Oberbegriff des Patentanspruchs 1.

Bei der Schnellzerreißprüfung oder Schlagzugprüfung müssen die Zugproben mit einer schlagartig am Beginn des Belastungshubes auf einen vorgegebenen Wert ansteigenden Belastungsgeschwindigkeit belastet werden. Da die Belastungseinrichtung, die beispielsweise von einem Hydraulik- oder Pneumatikzylinder oder einem elektromagnetischen Linearantrieb angetrieben wird, ihren Bewegungshub zunächst immer mit der Geschwindigkeit Null beginnen muß, wird bei Maschinen für die Schnellzerreißprüfung üblicherweise eine Vorlaufeinrichtung vorgesehen, durch die eine Beschleunigungsstrecke geschaffen wird, auf der die Belastungseinrichtung auf den vorgegebenen Geschwindigkeitswert beschleunigt wird.

Die Vorlaufeinrichtungen sind hinsichtlich der Konstruktion und insbesondere hinsichtlich der Funktion mit Problemen behaftet, die insbesondere dadurch hervorgerufen werden, daß im Augenblick der Kopplung nach Durchlaufen der Vorlaufstrecke eine durch die Belastungseinrichtung bewegte Masse auf die ruhende Masse der mit der Zugprobe verbundenen Bauteile trifft. Nach dem Impulssatz und Energiesatz bestimmt sich die resultierende Geschwindigkeit der Belastungseinrichtung unmittelbar nach dem Ankoppeln der Zugprobe entsprechend den aufeinandertreffenden Massen.

Beim elastischen Stoß werden die Belastungseinrichtungen und der zu beschleunigende Mitnehmerkolben entkoppelt und entsprechend den Massen auf verschiedene Geschwindigkeiten gebracht. Der entkoppelte Teil bestimmt die Zerreißenergie, die von der Entkoppelungsgeschwindigkeit und der Masse bestimmt ist.

Aus der US 4,426,875 ist eine Schlagzugprüfmaschine für Kunststoffäden bekannt. Bei dieser bekannten Schlagzugprüfmaschine ist die Probe an ihrem oberen Ende mit einem Maschinengestell verbunden und weist an ihrem unteren Ende eine weitere Einspannvorrichtung auf. Beim Prüfvorgang wird die für die Prüfung erforderliche Belastungsgeschwindigkeit durch eine zwischen den beiden Probenenden lösbar angeordnete mit Gewichten versehene Platte erreicht, die nach Durchlaufen einer Vorlaufstrecke auf die untere Einspannvorrichtung prallt.

Aufgabe der Erfindung ist es, die Entkoppelungen zu vermeiden und die gesamte Energie der Belastungseinrichtung auszunutzen, so daß die Probe die Geschwindigkeit der Belastungseinrichtung annehmen muß, ohne daß eine Überlastung der Maschine und Einspannung durch zu hohe Beschleunigungskräfte auftritt.

Diese Aufgabe wird erfindungsgemäß dadurch gelöst, daß die beiderseits eines Endes der Zugprobe angebrachten Einspannbacken jeweils an ihrer Außenseite eine zum Ende der Zugprobe hin ansteigende Keilfläche aufweisen, denen zwei entsprechende Keilflächen an zwei einander gegenüberliegenden Gegenlagerbacken des Gegenlagers zugeordnet sind.

Die Masse dieser unmittelbar an der Zugprobe angebrachten Einspannbacken ist vernachlässigbar gering, so daß die Prüfgeschwindigkeit bzw. Zerreißgeschwindigkeit auch schon unmittelbar nach dem Ankoppeln der Zugprobe gleich der Hubgeschwindigkeit der Belastungseinrichtung ist. Dadurch kann die gesamte kinetische Energie der bewegten Teile der Belastungseinrichtung, insbesondere eines Kolbens, zum Zerreißen der Zugprobe ausgenutzt werden. Eine konstruktiv aufwendige Vorlaufeinrichtung ist hierbei nicht erforderlich.

Je schlagartiger die Belastung der Zugprobe erfolgt, d. h. je besser die Forderung erfüllt wird, die Zugprobe schon unmittelbar zu Beginn der Zerreißbewegung mit der vorgegebenen konstanten Geschwindigkeit zu ziehen, desto kritischer ist die Krafteinleitung in die Zugprobe an der Einspannstelle, d. h. desto größer ist die Gefahr, daß eine einseitige oder ungleichmäßige Krafteinleitung in die Zugprobe zu einer unerwünschten Kerbspannung und somit einem Bruch an der Einspannstelle führt. Dieses Problem ist besonders groß, wenn eine der beiden Einspanneinrichtungen gemäß der Erfindung zugleich die Kupplung für die Verbindung mit der Belastungseinrichtung am Ende des Vorlaufhubes bildet.

Durch diese miteinander in Eingriff tretenden Keilflächen auf beiden Seiten der Zugprobe wird zum einen eine zwangmäßige Zentrierung der Zugprobe im Gegenlager der Einspanneinrichtung bewirkt, so daß eine einseitige Krafteinleitung vermieden wird. Zum anderen wird dadurch erreicht, daß sich die Klemmkraft, mit der die Zugprobe eingespannt wird, in gleichem Maße erhöht wie die eingeleitete Zugkraft. Dadurch ist der an der Einspannstelle entstehende mehrachsige Spannungszustand während des gesamten Ankopplungsvorgangs im wesentlichen gleich, wobei alle Spannungen gleichmäßig ansteigen.

Hierbei entfällt auch die Notwendigkeit, die Einspannbacken schon vor Beginn des Prüfungsvorgangs so fest gegen die Zugprobe zu verspannen, daß die Reibungskräfte zur Übertragung der Prüfkraft ausreichen.

Die geteilte Einspannvorrichtung, die zugleich zur Ankopplung am Ende des Vorlaufhubes dient, kann am Maschinengestell angeordnet sein. Die Zugprobe ist dabei fest mit der beweglichen Belastungseinrichtung verbunden und tritt mit dem gestellfesten Gegenlager am Ende des Vorlaufhubes in Eingriff. Stattdessen kann die geteilte Einspannvorrichtung auch an der Belastungseinrichtung angeordnet sein. In diesem Fall kann die Zugprobe am Maschinengestell fest mit einer Einspannvorrichtung oder lose eingekeilt in der geteilten Einspannvorrichtung angebracht werden.

Weitere vorteilhafte Ausgestaltungen des Erfindungsgedankens sind Gegenstand weiterer abhängiger Ansprüche.

Die Erfindung wird nachfolgend an Ausführungsbeispielen näher erläutert, die in der Zeichnung dargestellt sind.

Es zeigt:

Fig. 1 in einer vereinfachten Darstellungsweise eine Maschine für die Schnellzerreißprüfung, wobei eine geteilte Einspannvorrichtung am Maschinengestell angeordnet ist,

Fig. 2 eine Maschine für die Schnellzerreißprüfung in einer Darstellung ähnlich der Fig. 1, wobei die geteilte Einspannvorrichtung jedoch an der Belastungseinrichtung angeordnet ist, und

Fig. 3 eine Maschine für die Schnellzerreißprüfung in einer Darstellung ähnlich Fig. 2, wobei die geteilte Einspannvorrichtung sowohl an der Belastungseinrichtung als auch am Maschinengestell angeordnet ist.

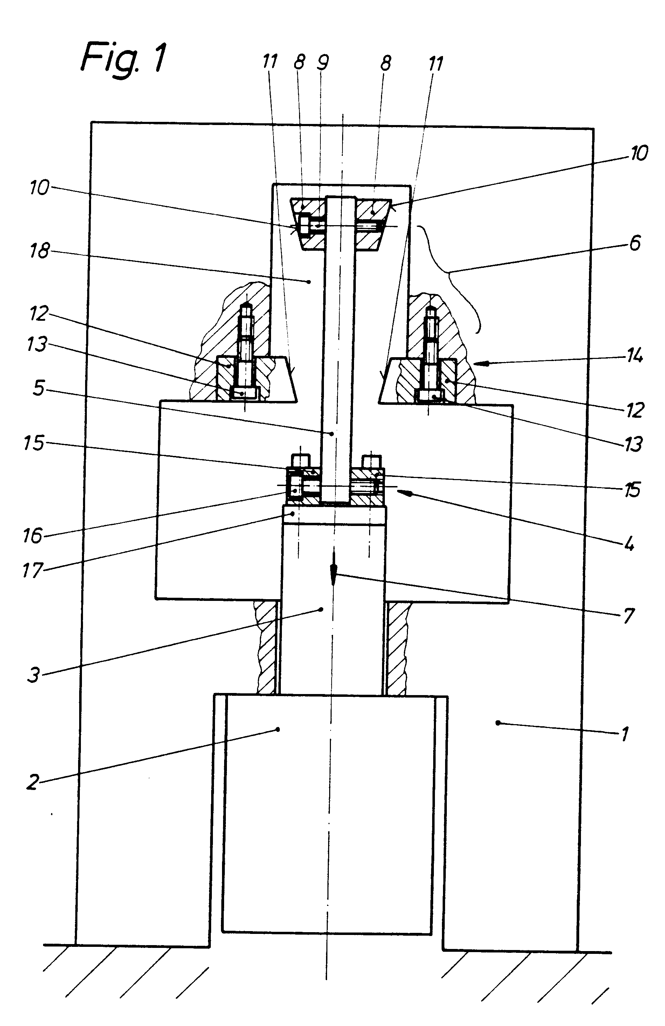

Die in Fig. 1 gezeigte Maschine für die Schnellzerreißprüfung weist eine rahmenförmiges Maschinengestell 1 auf, in dem eine Belastungseinrichtung 2 angeordnet ist, die beispielsweise einen Hydraulikzylinder, einen Pneumatikzylinder oder einen elektromagnetischen Linearantrieb für einen Hubkolben 3 besitzt.

Am Hubkolben 3 ist mittels einer Einspanneinrichtung 4 das untere Ende einer Zugprobe 5 eingespannt, die der Schnellzerreißprüfung oder Schlagzugprüfung unterworfen werden soll.

Das obere Ende der Zugprobe 5 ist mittels einer geteilten Einspanneinrichtung 6 mit dem Maschinengestell 1 verbindbar, sobald der Hubkolben einen vorgegebenen Weg nach unten in Richtung des Pfeiles 7 ausgeführt hat.

Die geteilte Einspanneinrichtung 6 weist zwei Einspannbacken 8 auf, die beiderseits des oberen Endes der Zugprobe 5 angebracht sind. Die beiden Einspannbacken 8 sind durch Schrauben 9 miteinander verbunden und werden gegen die Zugprobe 5 vorgespannt.

Jeweils an ihrer Außenseite weisen die Einspannbacken 8 Keilflächen 10 auf, die zum oberen Ende der Zugprobe 5 hin ansteigen. Jeweils entsprechend geneigte Keilflächen 11 sind an zwei einander gegenüberliegenden Gegenlagerbacken 12 ausgebildet, die jeweils über Schrauben 13 mit dem Maschinengestell 1 verbunden sind und ein gestellfestes Gegenlager 14 bilden.

Das untere Ende der Zugprobe 5 ist zwischen Einspannbacken 15 mittels Schrauben 16 eingespannt. Die die untere Einspanneinrichtung 4 bildenden Einspannbacken 5 sind über eine Kraftmesseinrichtung 17 mit dem Hubkolben 3 verbunden.

Oberhalb des Gegenlagers 14 befindet sich im Maschinengestell 1 eine Ausnehmung 18, deren Tiefe größer als der erforderliche Vorlaufhub der Belastungseinrichtung 2 ist.

Durch die Belastungseinrichtung 2 wird der Hubkolben 3 mit der daran angebrachten Zugprobe 5 auf die vorgegebene Prüfgeschwindigkeit beschleunigt. Sobald die Einspannbacken 8 mit dem Gegenlager 14 an den Keilflächen 10 bzw. 11 in Eingriff treten, werden die Einspannbacken 8 gegeneinander und gegen das obere Ende der Zugprobe 5 geklemmt und halten das Ende der Zugprobe 5 fest. Durch die kinetische Energie des Hubkolbens 3 wird die Zugprobe 5 mit einer je nach der Zerreißenergie annähernd konstant bleibenden Prüfgeschwindigkeiten zerrissen. Der dabei auftretende Kraftverlauf wird durch die Kraftmesseinrichtung 17 erfaßt und in einer (nicht dargestellten) Registriereinrichtung registriert.

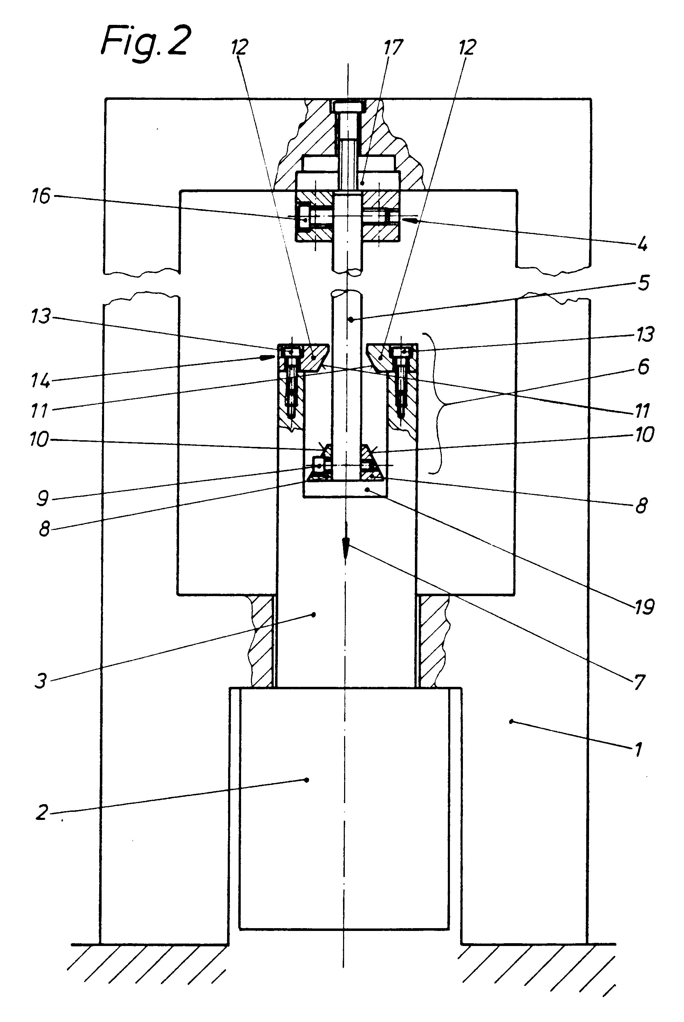

Das in Fig. 2 dargestellte Ausführungsbeispiel einer Maschine für die Schnellzerreißprüfung unterscheidet sich von dem Ausführungsbeispiel nach Fig. 1 dadurch, daß die geteilte Einspanneinrichtung 6 hierbei die bewegliche Einspanneinrichtung bildet. Die die Keilflächen 11 aufweisenden Gegenlagerbacken 12 sind am Hubkolben 3 angebracht und treten mit den am unteren Ende der Zugprobe 5 beiderseits befestigten Einspannbacken 8 in Eingriff, die die entsprechenden äußeren Keilflächen 10 aufweisen.

Die Zugprobe 5 ist an ihrem oberen Ende mittels der gestellfesten, ungeteilten Einspanneinrichtung 4 am Maschinengestell 1 unter Zwischenlage der Kraftmesseinrichtung 17 befestigt.

Um einen Vorlauf zu ermöglichen, bei dem der Hubkolben 3 auf die vorgegebene Prüfgeschwindigkeit gebracht wird, ist im Hubkolben 3 eine Ausnehmung 19 vorgesehen, deren Tiefe dem erforderlichen Vorlaufhub entspricht.

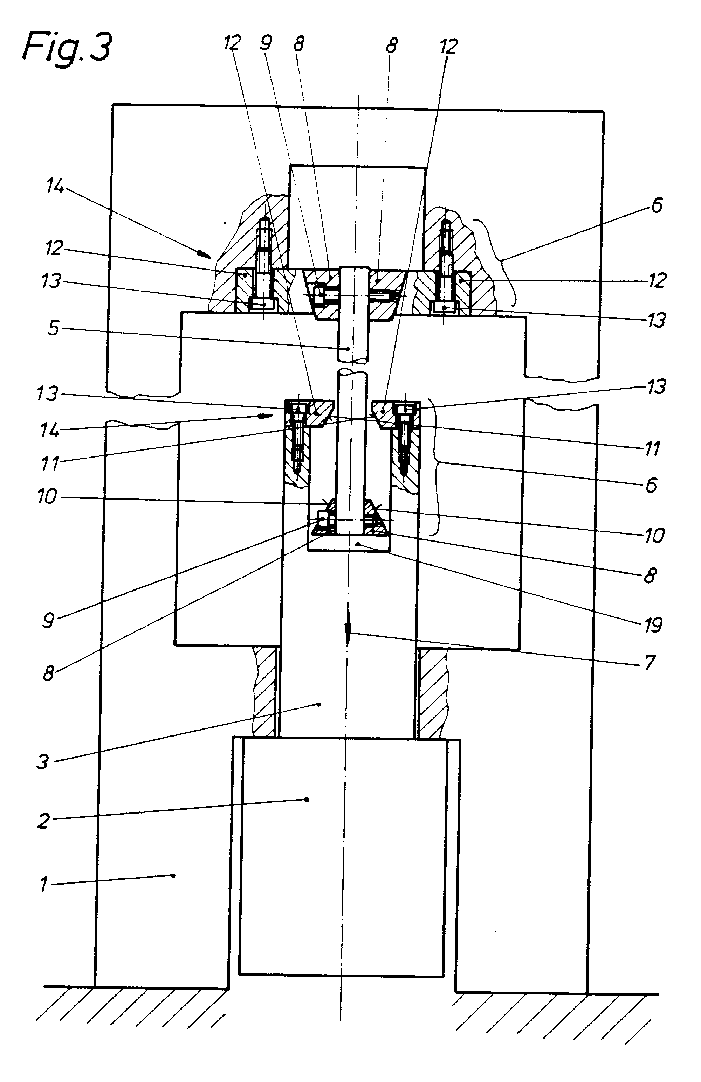

Das in Fig.3 dargestellte Ausführungsbeispiel unterscheidet sich von der Ausführung nach Fig. 2 dadurch, daß das Maschinengestell auch eine geteilte Einspanneinrichtung aufweist. Die Zugprobe hat auf beiden Enden je zwei Einspannbacken und ist auf der zum Maschinengestell zugewandten Seite nicht festgeklemmt, sondern lose in der geteilten Einspannvorrichtung angebracht.

Die Neigung der Keilflächen 10 und 11 wird vorzugsweise so gewählt, daß sie noch außerhalb des Grenzwinkels, jedoch nahe an diesem liegen, bei dem eine Selbsthemmung auftritt. Dadurch wird eine starke Klemmwirkung erreicht, ohne daß eine Selbsthemmung des Lösen der Zugprobe 5 erschweren würde.

Entsprechende Bauteile sind in den beiden Figuren mit entsprechenden Bezugszeichen bezeichnet.

**Patentansprüche**

1. Maschine für die Schnellzerreißprüfung von Zugproben (5), mit einem Maschinengestell (1), in dem die Zugprobe (5), zwischen einer gestellfesten Einspanneinrichtung und einer beweglichen, mit einer einen Belastungshub ausführenden Belastungseinrichtung (2, 3) verbundenen Einspanneinrichtung einspannbar ist, wobei mindestens eine der beiden Einspanneinrichtungen (6) in der Weise geteilt ausgeführt ist, daß an der Zugprobe (5) angebrachte Einspannbacken (8) beim Belastungshub mit einem am Maschinengestell (1) bzw. an der Belastungseinrichtung (2, 3) befestigter Gegenlager (14) in formschlüssigen Eingriffen bringbar sind, und wobei die beiderseits eines Endes der Zugprobe (5) angebrachten Einspannbacken (8) jeweils an ihrer Außenseite eine zum Ende der Zugprobe (5) hin ansteigende Keilfläche (10) aufweisen, denen zwei entsprechende Keilflächen (11) an zwei einander gegenüberliegenden Gegenlagerbacken (12) des Gegenlagers (14) zugeordnet sind.

2. Maschine für die Schnellzerreißprüfung nach Anspruch 1, dadurch gekennzeichnet, daß eine die beiden Einspannbacken (8) verbindende Verschraubung (9) diese beidseitig gegen die Zugprobe (5) spannt.

3. Maschine für die Schnellzerreißprüfung nach Anspruch 1, dadurch gekennzeichnet, daß die geteilte Einspanneinrichtung (6) am Maschinengestell (1) angeordnet ist, das auf der der Belastungseinrichtung (2) abgekehrten Seite eine Ausnehmung (18) aufweist, deren Tiefe mindestens dem erforderlichen Vorlaufhub der Belastungseinrichtung (2) entspricht.

4. Maschine für die Schnellzerreißprüfung nach Anspruch 1, dadurch gekennzeichnet, daß die geteilte Einspanneinrichtung (6) an der Belastungseinrichtung (2, 3) angeordnet ist, die an ihrem der Zugprobe (5) zugekehrten Ende eine Ausnehmung (19) aufweist, deren Tiefe mindestens dem erforderlichen Vorlaufhub der Belastungseinrichtung (2, 3) entspricht.

5. Maschine für die Schnellzerreißprüfung nach Anspruch 1, dadurch gekennzeichnet, daß die Spannbacken (8) auf beiden Enden der Zugprobe (5) angebracht sind und daß sowohl die Belastungseinrichtung (2) als auch das Maschinengestell (1) eine geteilte Einspanneinrichtung (6) aufweist.

**Claims**

1. A machine for rapid tensile shock testing of tensile specimens (5) with a machine frame (1) in which the tensile specimen (5) can be clamped between a clamping device which is fixed to the machine frame and a movable clamping device which is connected to a loading device (2,3) which performs a loading stroke, in which at least one of the two clamping devices (6) is so divided that clamping jaws (8) arranged on the tensile specimen (5) can be brought during the loading stroke into positive engagement with a counter bearing (14), which is fixed to the machine frame (1) and/or to the loading device (2,3), and in which the clamping jaws (8) arranged on both sides of one end of the tensile specimen (5) each have on their outside a wedge surface rising to the end of the tensile specimen (5), associated with which are corresponding wedge surfaces (11) on two opposite counter bearing jaws (12) of the counter bearing (14).

2. A machine for rapid tensile shock testing according to claim 1, characterised in that a screw arrangement (9) connecting the two clamping jaws (8) clamps them on both sides against the tensile specimen (5).

3. A machine for rapid tensile shock testing according to claim 1, characterised in that the divided clamping device (6) is arranged on the machine frame (1), which has a recess (18) on its side remote from the loading device (2), the depth of which corresponds at least to the required lead stroke of the loading device (2).

4. A machine for rapid tensile shock testing according to claim 1, characterised in that the divided clamping device (6) is arranged on the loading device (2,3), which has a recess (19) on its end facing the tensile specimen (5), its depth corresponding at least to the required lead stroke of the loading device (2,3).

5. A machine for rapid tensile shock testing according to claim 1, characterised in that the clamping jaws (8) are arranged on both ends of the tensile specimen (5) and that both the loading device (2) and the machine frame (1) have a divided clamping device (6).

## Revendications

1. Machine pour l'essai rapide de rupture à la traction d'éprouvettes de traction (5) avec un bâti de machine (1) dans lequel l'éprouvette de traction (5) peut être serrée, entre un dispositif de serrage solidaire du bâti et un dispositif de serrage mobile, relié à un dispositif de charge (2, 3) exécutant une course de charge, l'un au moins des deux dispositifs de serrage (6) étant constitué de parties telles que des mâchoires de serrage (8), appliquées sur l'éprouvette de traction (5) puissent être amenées en prise, par concordance de forme, pendant la course de charge, avec un contre-appui (14), fixé sur le bâti de machine (1) ou sur le dispositif de charge (2, 3), et dans laquelle les mâchoires de serrage (8), appliquées sur les deux côtés d'une extrémité de l'éprouvette de traction (5), présentent chacune sur leur côté extérieur, une surface conique (10) montant vers l'extrémité de l'éprouvette de traction (5), à ces surfaces coniques étant associées deux surfaces coniques (11) correspondantes, sur deux mâchoires de contre-appui (12) opposées l'une à l'autre, du contre-appui (14).

2. Machine pour l'essai rapide de rupture à la traction selon la revendication 1, caractérisée en ce qu'un vissage (9), reliant les deux mâchoires de serrage (8) serre celles-ci des deux côtés contre l'éprouvette de traction (5).

3. Machine pour l'essai rapide de rupture à la traction selon la revendication 1, caractérisée en ce que le dispositif de serrage (6) en plusieurs parties, est placé sur le bâti de machine (1) qui présente, sur le côté opposé au dispositif de charge (2), un évidement (18) dont la profondeur correspond au moins à l'avant-course nécessaire du dispositif de charge (2).

4. Machine pour l'essai rapide de rupture à la traction selon la revendication 1, caractérisée en ce que le dispositif de serrage (6) en plusieurs parties est placé sur le dispositif de charge (2, 3) qui, à son extrémité tournée vers l'éprouvette de traction (5), présente un évidement (19) dont la profondeur correspond au moins à l'avant-course nécessaire du dispositif de charge (2, 3).

5. Machine pour l'essai rapide de rupture à la traction selon la revendication 1, caractérisée en ce que les mâchoires de serrage (8) sont placées aux deux extrémités de l'éprouvette de traction (5) et en ce que le dispositif de charge (2) ainsi que le bâti de machine (1) comportent un dispositif de serrage (6) en plusieurs parties.

Fig. 1

Fig.2

# Fig.3